# EUROPEAN PATENT SPECIFICATION

(11) **EP 2 291 310 B1**
(45) Date of publication and mention of the grant of the patent: **24.06.2015**
(21) Application number: 09746129.7
(22) Date of filing: 01.05.2009
(51) Int. Cl.: B64C 1/38, B64C 1/40, B64D 29/00, B64D 33/02, B64D 15/02, B64D 15/12

(54) **COUPLING FOR INDUCING HIGH TEMPERATURE DROPS BETWEEN CONNECTED PARTS ON AN AIRCRAFT**
KUPPLUNG ZUR ERZEUGUNG VON STARKEM TEMPERATURABFALL ZWISCHEN VERBUNDENEN TEILEN AN EINEM FLUGZEUG
COUPLAGE DESTINÉ À PROVOQUER DES CHUTES DE TEMPÉRATURE IMPORTANTES ENTRE DES PARTIES RELIÉES SUR UN AÉRONEF

(30) Priority: 15.05.2008 IT MI20080886
(43) Date of publication of application: 09.03.2011
(73) Proprietor: Alenia Aermacchi S.p.A., 21040 Venegono Superiore (Varese) (IT)
(72) Inventor: PREMAZZI, Marco, 21040 Venegono Inferiore (Varese) (IT); GARUCIO, Federico, 20091 Bresso (Milano) (IT)
(74) Representative: Di Gennaro, Sergio
(86) International application number: PCT/IB2009/005471
(87) International publication number: WO 2009/138833

(56) References cited:
- WO-A-94/18072
- GB-A- 839 647
- US-A- 4 688 745
- US-B1- 6 194 081
- US-B1- 6 328 258

## Description

The present invention refers to a coupling for inducing high temperature drops between connected parts on an aircraft, such as for example an engine nacelle or a coupling profile for the wings, comprising an edge portion subjected to high temperature and a bearing structure having limited capacity to resist against high temperatures.

In the aeronautical industry the engine bearing structure or the casing thereof is conventionally referred to as "nacelle", and it has connected parts one of which is heated and the other has limited capacity to resist against high temperatures.

The aircraft engine nacelle is divided into different parts connected to each other and in particular for the front part, commonly referred to as "engine air inlet", it comprises an annular inlet profile and a bearing structure or body of the nacelle air inlet. Such an engine nacelle is known from US 6 328 258 B1 (Fig. 2), corresponding to the preamble of claim 1.

The inlet edge profiles of the aircraft engine nacelles are usually protected against formation and or accumulation of ice. Generally, protection systems are of the pneumatic or thermal type. The thermal systems, in particular, are based on the convective heating by means of hot compressed air or on the electrical heating of the surfaces to be protected against ice. The thermal systems are adapted to induce heat to the input edge profile. Such heat generally tends to spread by conduction also to the bearing structure which supports the heated profile, in that, in the systems of the known type, the coupling of the structure of the hot part of the inlet profile with the cold support part is attained by directly joining the two structures to each other.

Generally, the increasing use, regarding aeronautical structures, of composite materials, with limited resistance against exposure to high temperatures, makes such spreading of the heat detrimental.

Thus, the Applicant thought of how to prevent the transfer of heat from an actively heated profile towards the structure bearing the same, i.e. maximise the temperature drop.

The Applicant found a solution to such problem by making a coupling in which the two abovementioned profile parts or edge and bearing structure are, not directly placed at contact with each other, but are connected to each other by means of at least one heat bridge, which represents a mechanical continuity element.

The heat may thus migrate by conduction from the profile structure of the input edge to the support one, only passing through the compulsory path provided for by the heat bridge which is obtained using low heat conductivity materials. Such materials hinder heat transfer by conduction from the hotter part of the coupling to the colder one, increasing, considering the same heat exchange, the temperature drops.

Furthermore, the coupling, if positioned in parts of the nacelle with low aerodynamics turbulence introduces a physical discontinuity of the aerodynamic profile in the part exposed to air, between the profile of the input edge and that of the support structure, due to the presence of the previously illustrated contact discontinuity between the materials. Such discontinuity facilitates and imposes passing from the laminar motion regime to the turbulent motion regime of the air flowing thereabove. The turbulent motion in turn increases heat exchange of the convective type between the air and the surface of the structure downstream of the interruption, actively cooling it. The present invention provides an engine nacelle according to claim 1, with preferred embodiments defined in dependent claims 2 and 3.

Further aims and advantages of the coupling for inducing high temperature drops between connected parts on an aircraft according to the present invention shall be apparent from the following description and from the attached drawings, provided merely for exemplifying and non-limiting purposes, wherein:

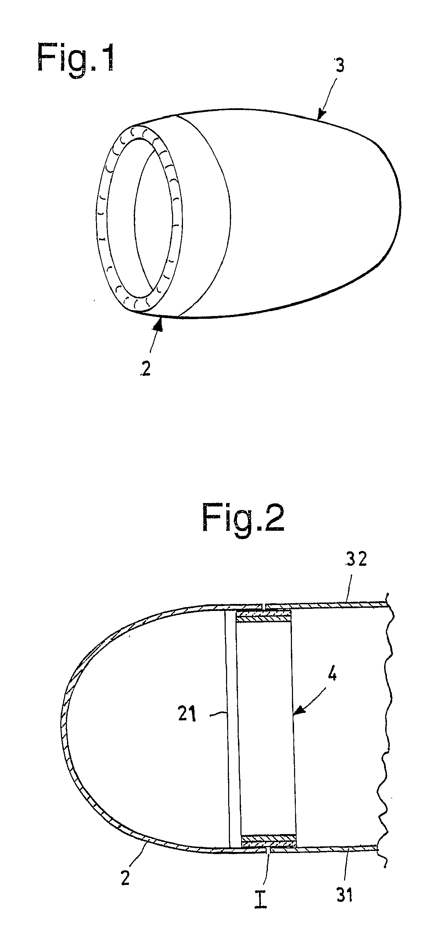

- figure 1 shows a perspective view of an engine nacelle according to the present invention;
- figure 3a shows a sectional view of an enlarged detail of the coupling for inducing high temperature drops between parts connected on engine nacelles of figure 1 according to a first embodiment of the present invention;
- figure 3b shows a sectional view of an enlarged detail of the coupling for inducing high temperature drops between connected parts on engine nacelles of figure 1 according to a second embodiment of the present invention.

Referring to the abovementioned figures, according to the present invention, the engine nacelle comprises an oblong-shaped casing hollow therein and adapted to contain the turbo-reactor with all the elements thereof, such as for example the turbine, the compressor and the combustion chamber.

Referring to the abovementioned figures, such casing is divided into two parts connected to each other and in particular it comprises an annular edge portion 2 having an extended profile and a bearing structure 3 or nacelle body.

Such edge portion is usually heated to protect it against formation and or accumulation of ice. The heating systems are of the convective or electrical type and they are adapted to provide heat to the profile of such edge portion.

The edge portion further comprises a baffle 21 which contains - at the rear part - the profile of the input edge of the nacelle.

The bearing structure is made up of an external panel 31 and an internal panel 32, which can be for example a sound absorbing panel, the panels being substantially concentric with respect to each other.

According to the present invention, the edge portion and the bearing structure are connected to each other by means of a joint or hinge 4 adapted to determine the mechanical continuity between the profile structure of the input edge and that of the bearing structure, in that the two parts are not directly in contact with each other. Analogously, according to the present invention, other connected parts of the aircraft may be joined to each other by means of one or more of the abovementioned hinges.

Such hinge is preferably made by means of a metal layer 41, for example titanium or a titanium-based alloy, overlapped onto a non-metal layer 42, for example by means of a layer of epoxy glass fibre, in such a manner to obtain an overall hinge having low heat conductivity.

The coefficient of heat conductivity of the materials used for making the hinge are listed in Table A. Table A also provides the heat conductivity value of the aluminium alloy used for manufacturing the input edge of the engine nacelle. Comparing the heat conductivity values of the materials used for manufacturing the hinge with that of the aluminium alloy it shows that:
- the heat conductivity of Titanium T50 is lower by one order,
- the heat conductivity of the Titanium T6AL4V alloy is lower by two orders,
- the heat conductivity of glass fibre is lower by three orders

**Table A**

| Materials | Aluminium 2219 alloy (input edge) | Titanium T50 | Titanium T6AL4V Alloy | Fibreglass |
|---|---|---|---|---|
| Thermal conductivity W/m K (in the temperature range between 20°C and 100°C) | 170 | 17 | 7 | 0.05 |

In practice, the hinge provides a heat bridge that hinders the transfer of heat by conduction from the hotter part of the coupling (input structure) to the colder one (bearing structure), increasing, considering the same heat exchange, the temperature drops. Furthermore, the heat bridge, if positioned in parts with low aerodynamic turbulence, introduces a physical discontinuity of the aerodynamic profile in the part exposed to air, between the profile of the input edge and that of the bearing structure, due to the presence of the previously illustrated contact discontinuity between the materials. Such discontinuity facilitates and imposes passing from the laminar motion regime to the turbulent motion regime of the air flowing thereabove. The turbulent motion in turn increases the heat exchange of the convective type between the air and the surface of the structure downstream of the interruption, actively cooling it.

According to the present invention, such hinge may be positioned both between the edge 2 and the external panel 31 of the bearing structure and between the edge and the internal panel 32.

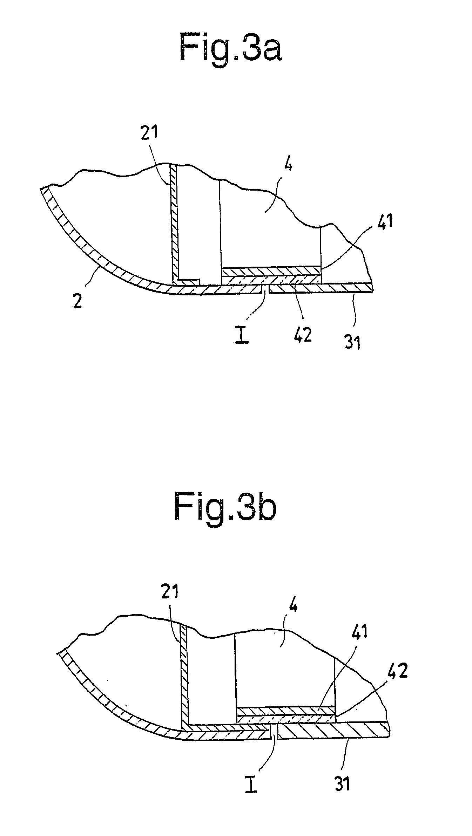

Furthermore, in the preferred embodiment of figure 3a, the hinge is directly applied to the coupling I between the profile of the input edge and the bearing structure thereof, while in figure 3b the hinge is also overlapped onto the baffle 21 for closing such edge.

The epoxy glass fibre layer is preferably made integral with the metal layer made of titanium by means of a process for curing the resin in autoclave or oven. The thicknesses of the hinge (titanium layer and fibre glass layer) are variable depending on the load the structure is required to bear and on the heat flow that the heat bridge is required to reduce.

## Claims

1. Engine nacelle having a coupling for inducing high temperature drops on said engine nacelle, said engine nacelle comprising an annular inlet edge portion (2) subjected to high temperature and a bearing structure (3) having limited capacity to resist against high temperatures, the bearing structure being formed by an external panel (31) and an internal panel (32), which is a sound absorbing panel, the panels being substantially concentric with respect to each other, the annular inlet edge portion comprising a baffle (21) closing at the rear part the annular inlet edge portion, said coupling comprising at least one joint (4) connecting said annular inlet edge portion and the bearing structure, **characterized in that** the joint is made of a metal layer overlapped-onto by a non-metal layer, the metal layer being made of titanium or titanium alloy and the non-metal layer being a glass fibre layer.

2. Engine nacelle according to claim 1, wherein the joint is positioned between the edge portion (2) and the external panel (31) of the bearing structure or between the edge portion (2) and the internal panel (32).

3. Engine nacelle according to claim 1, wherein the joint is overlapped onto the baffle angle (21) closing the annular inlet edge portion.

## Patentansprüche

1. Triebwerksgondel mit einer Kopplung zum Induzieren hoher Temperaturgefälle an der Triebwerksgondel, wobei die Triebwerksgondel einen ringförmigen Einlassrandabschnitt (2), der hoher Temperatur ausgesetzt ist, und eine tragende Struktur (3) mit begrenzter Kapazität, den hohen Temperaturen zu widerstehen, umfasst, wobei die tragende Struktur aus eine Außenwandplatte (31) und einer Innenwandplatte (32) ausgebildet ist, die aus einer Schall absorbierenden Platte besteht, wobei die Platten im Wesentlichen konzentrisch im Verhältnis zueinander verlaufen, wobei der ringförmige Einlassrandabschnitt eine Prallfläche (21) umfasst, die den hinteren Teil des ringförmigen Einlassrandabschnitts verschließt, wobei die Kupplung mindestens eine Verbindung (4) umfasst, mit welcher der ringförmige Einlassrandabschnitt und die tragende Struktur verbunden werden,
**dadurch gekennzeichnet, dass** die Verbindung aus einer Metallschicht besteht, die von einer Nicht-Metallschicht überlappt wird, wobei die Metallschicht aus Titan oder Titanlegierung hergestellt ist und die Nicht-Metallschicht aus einer Glasfaserschicht besteht.

2. Triebwerksgondel nach Anspruch 1, wobei die Verbindung zwischen dem Randabschnitt (2) und der Außenwandplatte (31) der tragenden Struktur oder zwischen dem Randabschnitt (2) und der Innenwandplatte (32) positioniert ist.

3. Triebwerksgondel nach Anspruch 1, wobei die Verbindung auf den Prallflächenwinkel (21) überlappt, der den ringförmigen Einlassrandabschnitt schließt.

## Revendications

1. Nacelle de moteur comprenant un couplage destiné à provoquer des chutes de température importantes sur ladite nacelle de moteur, ladite nacelle de moteur comprenant une portion de bord d'entré annulaire (2) soumise à une haute température et une structure portante (3) ayant une capacité limitée à résister aux hautes températures, la structure portante étant constituée d'un panneau externe (31) et d'un panneau interne (32), qui est un panneau d'absorption sonore, les panneaux étant sensiblement concentriques l'un par rapport à l'autre, la portion de bord d'entrée annulaire comprenant une chicane (21) fermant, à la partie arrière, la portion de bord d'entrée annulaire, ledit couplage comprenant :
au moins une jointure (4) reliant ladite portion de bord d'entrée annulaire et la structure portante,
**caractérisée en ce que** la jointure est constituée d'une couche métallique chevauchée par une couche non métallique, la couche métallique étant constituée de titane ou d'un alliage de titane et la couche non métallique étant une couche de fibres de verre.

2. Nacelle de moteur selon la revendication 1, dans laquelle la jointure est positionnée entre la portion de bord (2) et le panneau externe (31) de la structure portante ou entre la portion de bord (2) et le panneau interne (32).

3. Nacelle de moteur selon la revendication 1, dans laquelle la jointure est superposée sur l'angle de chicane (21) fermant la portion de bord d'entrée annulaire.
